# EUROPÄISCHE PATENTANMELDUNG

(11) **EP 3 751 123 A1**
(43) Veröffentlichungstag der Anmeldung: **16.12.2020**
(21) Anmeldenummer: 19180334.5
(22) Anmeldetag: 14.06.2019
(51) Int. Cl.: F02F 1/24, B23P 6/02

(54) **ZYLINDERDECKEL FÜR EINEN ZYLINDER EINES GROSSDIESELMOTORS UND VERFAHREN ZUM REPARIEREN EINES ZYLINDERDECKELS**

(71) Anmelder: Winterthur Gas & Diesel AG, 8401 Winterthur (CH)
(72) Erfinder: Räss, Konrad, 8457 Humlikon (CH); Götte, Stefan, 8444 Henggart (CH)
(74) Vertreter: Intellectual Property Services GmbH

(57) **Zusammenfassung**

Es wird ein Zylinderdeckel für einen Zylinder eines Grossdieselmotors vorgeschlagen, wobei der Zylinderdeckel mindestens eine Brennstoffbohrung (4) für die Aufnahme einer Brennstoffeinspritzdüse aufweist, sowie eine Brennraumfläche (5) zur Begrenzung eines Brennraums (2), welcher eine Brennraumachse (A) aufweist, wobei sich die Brennstoffbohrung (4) in Richtung einer Brennstoffachse (B) erstreckt und in die Brennraumfläche (5) einmündet, wobei in der Brennstoffbohrung (4) eine Sitzfläche (41) für die Brennstoffeinspritzdüse vorgesehen ist, wobei die Sitzfläche (41) eine Symmetrieachse aufweist, welche mit der Brennstoffachse (B) zusammenfällt, wobei die Sitzfläche (41) durch einen Düsenkanal (42) mit der Brennraumfläche (5) verbunden ist, und wobei der Düsenkanal (42) ein Längenverhältnis aufweist, welches das Verhältnis aus einer maximalen Länge (L1) des Düsenkanals (42) und einer minimalen Länge (L2) des Düsenkanals (42) ist, wobei das Längenverhältnis höchstens gleich zwei ist. Ferner wird ein Verfahren zum Reparieren eines Zylinderdeckels (1) vorgeschlagen, sowie ein Grossdieselmotor.

## Beschreibung

Die Erfindung betrifft einen Zylinderdeckel für einen Zylinder eines Grossdieselmotors sowie ein Verfahren zum Reparieren eines Zylinderdeckels gemäss dem Oberbegriff des unabhängigen Patentanspruchs der jeweiligen Kategorie.

Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Es sind verschiedene Arten von Grossdieselmotoren bekannt, die jeweils als Zweitakt- oder als Viertakt-Motoren ausgestaltet sein können. Klassischerweise werden Grossdieselmotoren mit Schweröl als Brennstoff betrieben. Unter den Aspekten des wirtschaftlichen und effizienten Betriebs, der Einhaltung von Abgasgrenzwerten und der Verfügbarkeit von Ressourcen sucht man auch bei Grossdieselmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas) bekannt.

Eine ebenfalls bekannte Alternative zum reinen Betrieb mit Schweröl ist es, Grossdieselmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird.

Eine bekannte Ausgestaltung eines Grossdieselmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoff in demselben Motor verbrannt werden können. Diese Grossdieselmotoren können dabei sowohl Zweitakt- als auch Viertaktmotoren sein, insbesondere auch längsgespülte Zweitakt-Grossdieselmotoren.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-Brennstoff-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel oder Multi-Fuel Grossmotoren, die ausser im Dieselbetrieb auch noch in einem anderen Betrieb, beispielsweise dem Otto-Betrieb betreibbar sind.

Ein Grossdieselmotor umfasst mindestens einen Zylinder, üblicherweise aber mehrere Zylinder, wobei in jedem Zylinder ein Kolben vorgesehen ist, der zwischen einem oberen Totpunkt und einem unteren Totpunkt hin und her bewegbar angeordnet ist. Ferner umfasst jeder Zylinder einen Zylinderdeckel, der gemeinsam mit dem Kolben einen Brennraum begrenzt. Während des Betriebs wird ein Brennstoff in den Brennraum eingebracht, welcher je nach Betriebsart fremdgezündet wird oder sich selbst entzündet, wenn der Kolben in der Nähe des oberen Totpunkts ist.

Insbesondere für den Dieselbetrieb, bei welchem beispielsweise Schweröl als Brennstoff verwendet wird, ist es eine bekannte Massnahme, dass am Zylinderkopf mindestens eine, häufig aber auch mehrere Brennstoffeinspritzdüsen vorgesehen sind, mit welchen der Brennstoff unter Hochdruck in den Brennraum eingespritzt wird. Für jede Brennstoffeinspritzdüse ist üblicherweise eine Bohrung im Zylinderdeckel vorgesehen, welche sich bis in den Brennraum erstreckt. In dieser Bohrung ist eine Sitzfläche vorgesehen, auf welcher die Brennstoffeinspritzdüse aufsitzt, d. h. stromabwärts der Sitzfläche ist die Bohrung als Düsenkanal mit einem deutlich kleineren Durchmesser ausgestaltet. Die Brennstoffeinspritzdüse weist an ihrem Ende einen Düsenkopf auf, durch welchen der Brennstoff eingespritzt wird. Wenn die Brennstoffeinspritzdüse in der Bohrung angeordnet ist, erstreckt sich der Düsenkopf durch den Düsenkanal bis in den Brennraum hinein. Das heisst, der Düsenkopf steht über die Wandung hinaus, welche den Brennraum begrenzt. Der Düsenkopf hat eine Mehrzahl von Düsenlöchern, durch welche der Brennstoff in an sich bekannter Art in den Brennraum eingespritzt wird.

Üblicherweise ist die Brennstoffeinspritzdüse so angeordnet, dass sie sich schräg zur Zylinderachse des Zylinders bzw. zur Brennraumachse erstreckt, wobei die Brennraumachse üblicherweise mit der Zylinderachse zusammenfällt. Die Längsachse der Brennstoffeinspritzdüse schliesst dann mit der Zylinderachse einen spitzen Winkel ein. Dabei ist es aufgrund der stark beschränkten Platzverhältnisse in der Regel nicht möglich, die Brennstoffeinspritzdüse(n) unter einem beliebigen Winkel zur Zylinderachse anzuordnen, sondern der realisierbare Winkelbereich ist stark eingeschränkt.

Diejenigen Bereiche der Brennraumwand, an denen die Düsenköpfe der Brennstoffeinspritzdüsen in den Brennraum hineinragen, sind während des Betriebs des Grossdieselmotors besonders hohen thermisch bedingten Belastungen ausgesetzt. Das gilt insbesondere für die Bereiche, die im Austrittsbereich der Düsenlöcher liegen, durch welche der Brennstoff in den Brennraum eintritt. So kann es am Rand des Loches, wo der Düsenkanal in den Brennraum mündet, zu Materialabtrag und in der Folge zu gefährlichen Rissbildungen kommen, die aufwändige und kostenintensive Reparatur- oder Wartungsarbeiten notwendig machen.

Es ist daher eine Aufgabe der Erfindung, einen Zylinderdeckel für einen Zylinder eines Grossdieselmotors vorzuschlagen, bei welchem die Gefahr der Rissbildung im Bereich der Düsenkanäle, durch welche die Düsenköpfe in den Brennraum ragen, zumindest deutlich reduziert ist. Ferner ist es eine Aufgabe der Erfindung, ein Verfahren zum Reparieren eines Zylinderdeckels vorzuschlagen, mit welchem sich die Gefahr zukünftiger Rissbildung zumindest deutlich reduzieren lässt.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Zylinderdeckel für einen Zylinder eines Grossdieselmotors vorgeschlagen, wobei der Zylinderdeckel mindestens eine Brennstoffbohrung für die Aufnahme einer Brennstoffeinspritzdüse aufweist, sowie eine Brennraumfläche zur Begrenzung eines Brennraums, welcher eine Brennraumachse aufweist, wobei sich die Brennstoffbohrung in Richtung einer Brennstoffachse erstreckt und in die Brennraumfläche einmündet, wobei in der Brennstoffbohrung eine Sitzfläche für die Brennstoffeinspritzdüse vorgesehen ist, wobei die Sitzfläche eine Symmetrieachse aufweist, welche mit der Brennstoffachse zusammenfällt, wobei die Sitzfläche durch einen Düsenkanal mit der Brennraumfläche verbunden ist, wobei der Düsenkanal ein Längenverhältnis aufweist, welches das Verhältnis aus einer maximalen Länge des Düsenkanals und einer minimalen Länge des Düsenkanals ist, und wobei das Längenverhältnis höchstens gleich zwei ist.

Wesentlich für die Erfindung ist die Erkenntnis, dass die variierende Länge des Düsenkanals, welcher die Sitzfläche der Brennstoffbohrung mit dem Brennraum verbindet, über den Umfang des Düsenkanals gesehen eine wesentliche Ursache für die Rissbildung in der Wandung des Brennraums darstellt. Bei bekannten Ausgestaltungen des Zylinderdeckels ist es so, dass die Sitzfläche in der Brennstoffbohrung, auf welcher die Brennstoffeinspritzdüse aufliegt, über ihren Umfang gesehen einen sich relativ stark verändernden Abstand vom Brennraum hat. Entlang des Umfangs der Sitzfläche gesehen, ist die Sitzfläche unterschiedlich weit vom Brennraum beabstandet. Dies hat zur Folge, dass der Düsenkanal an manchen Stellen seines Umfangs eine deutlich kürzere Länge hat als an anderen. Durch die Erfindung wird nun vorgeschlagen, diese Änderungen in der Länge des Düsenkanals zu reduzieren, derart dass das Längenverhältnis, welches das Verhältnis aus der maximalen und der minimalen Länge des Düsenkanals ist, höchstens zwei beträgt. Durch diese Reduzierung in der Änderung der Länge des Düsenkanals über seinen Umfang gesehen, lässt sich die Rissbildung im Brennraum zumindest deutlich reduzieren.

Idealerweise ist das Verhältnis aus der maximalen Länge und der minimalen Länge gleich eins, das heisst die maximale und die minimale Länge sind identisch, sodass der Düsenkanal über seinen gesamten Umfang gesehen eine konstante Länge aufweist. In vielen Anwendungsfällen kann dieser Idealfall jedoch aus praktischen Gründen nicht realisiert werden. Es hat sich jedoch gezeigt, dass sich zumindest eine sehr gute Reduzierung, wenn nicht sogar eine vollständige Unterdrückung der Rissbildung insbesondere dann realisieren lässt, wenn das Längenverhältnis höchstens 1.5 ist und vorzugsweise kleiner als 1.4 ist.

Eine besonders bevorzugte Ausführungsform zur Reduzierung des Längenverhältnisses ist es, auf der Brennraumfläche eine wulstförmige Erhebung vorzusehen, welche einen Teil des Düsenkanals begrenzt. Durch diese Massnahme lässt sich der Düsenkanal in denjenigen Bereichen entlang seines Umfangs verlängern, in denen der Düsenkanal ohne die Erhebung kürzer wäre als in anderen Bereichen. Bei dieser Ausführungsform wird der Düsenkanal in denjenigen Bereichen verlängert, in denen er ohne die Erhebung die kleinste Länge aufweist.

Vorzugsweise begrenzt die Erhebung den Düsenkanal auf seiner der Brennraumachse zugewandten Seite, weil dieser Bereich üblicherweise derjenige ist, an welcher der Abstand der Sitzfläche vom Brennraum am kleinsten ist.

Vorzugsweise ist die Erhebung derart ausgestaltet, dass sie das Längenverhältnis auf einen vorgebbaren Wert reduziert. Wie bereits gesagt, ist der minimale Wert für das Längenverhältnis gleich eins. Für viele Anwendungen ist in der Praxis jedoch vollkommen ausreichend, wenn man das Längenverhältnis auf einen Wert von grösser als eins einstellt, beispielsweise auf 1.4. Der jeweils gewünschte Wert für das Längenverhältnis kann dann durch die geometrischen Abmessungen der Erhebung realisiert werden.

Da die Erhebung in erster Linie den Unterschied zwischen der maximalen Länge des Düsenkanals ohne Erhebung und der minimalen Länge des Düsenkanals ohne Erhebung reduzieren oder ausgleichen soll, ist es vorteilhaft, wenn sich die Erhebung in Umfangsrichtung des Düsenkanals gesehen höchstens über den halben Umfang des Düsenkanals erstreckt.

Um das Längenverhältnis möglichst weit zu reduzieren, ist es vorteilhaft, wenn sich die Höhe der Erhebung in Umfangsrichtung des Düsenkanals gesehen ändert. Mit der Höhe der Erhebung ist dabei die Erstreckung der Erhebung senkrecht zur Brennraumfläche gemeint.

Ferner ist es bevorzugt, wenn die Erhebung eine maximale Breite aufweist, die mindestens so gross ist wie der halbe Radius des Düsenkanals und vorzugsweise mindestens so gross wie der Radius des Düsenkanals. Mit der Breite der Erhebung ist dabei die Abmessung gemeint, wie weit sich die Erhebung in der Brennraumfläche von dem Düsenkanal weg erstreckt.

Eine andere bevorzugte Ausführungsform zur Reduzierung des Längenverhältnisses ist, in der Brennraumfläche eine Ausnehmung vorzusehen ist, in welche der Düsenkanal einmündet.

Durch diese Massnahme lässt sich der Düsenkanal in denjenigen Bereichen entlang seines Umfangs verkürzen, in denen der Düsenkanal ohne die Ausnehmung länger wäre als in anderen Bereichen. Bei dieser Ausführungsform wird der Düsenkanal in denjenigen Bereichen verkürzt, in denen er ohne die Ausnehmung die grösste Länge aufweist.

Vorzugsweise ist die Ausnehmung derart ausgestaltet, dass sie das Längenverhältnis auf einen vorgebbaren Wert reduziert. Wie bereits gesagt, ist der minimale Wert für das Längenverhältnis gleich eins. Für viele Anwendungen ist es in der Praxis jedoch vollkommen ausreichend, wenn man das Längenverhältnis auf einen Wert von grösser als eins einstellt, beispielsweise auf 1.5. Der jeweils gewünschte Wert für das Längenverhältnis kann dann durch die geometrischen Abmessungen der Ausnehmung realisiert werden.

Da die Ausnehmung in erster Linie den Unterschied zwischen der maximalen Länge des Düsenkanals ohne Ausnehmung und der minimalen Länge des Düsenkanals ohne Ausnehmung reduzieren oder ausgleichen soll, ist es vorteilhaft, wenn sich die Ausnehmung in Umfangsrichtung des Düsenkanals gesehen, mindestens über den halben Umfang des Düsenkanals erstreckt.

Es ist auch möglich, dass sich die Ausnehmung in Umfangsrichtung des Düsenkanals gesehen über den gesamten Umfang des Düsenkanals erstreckt. Dabei ändert sich die Tiefe der Ausnehmung in Umfangsrichtung des Düsenkanals gesehen derart, dass die maximale Länge des Düsenkanals höchstens doppelt so gross ist wie die minimale Länge des Düsenkanals. Die Ausnehmung über den gesamten Umfang des Düsenkanals vorzusehen hat den Vorteil, dass sich scharfe Kanten oder sehr dünne Bereiche an der Begrenzung des Düsenkanals vermeiden lassen.

Da sich die Ausnehmung entlang zumindest eines Teils des Umfangs des Düsenkanals erstreckt, weist die Ausnehmung einen Radius auf. Vorzugsweise ist dieser Radius mindestens doppelt so gross ist wie der Radius des Düsenkanals.

Durch die Erfindung wird ferner ein Verfahren zum Reparieren eines Zylinderdeckels eines Zylinders eines Grossdieselmotors vorgeschlagen, wobei der Zylinderdeckel mindestens eine Brennstoffbohrung für die Aufnahme einer Brennstoffeinspritzdüse aufweist, sowie eine Brennraumfläche zur Begrenzung eines Brennraums, welcher eine Brennraumachse aufweist, wobei sich die Brennstoffbohrung in Richtung einer Brennstoffachse erstreckt und in die Brennraumfläche einmündet, wobei in der Brennstoffbohrung eine Sitzfläche für die Brennstoffeinspritzdüse vorgesehen ist, wobei die Sitzfläche eine Symmetrieachse aufweist, welche mit der Brennstoffachse zusammenfällt, und wobei die Sitzfläche durch einen Düsenkanal mit der Brennraumfläche verbunden ist. Das Verfahren ist insbesondere dadurch gekennzeichnet, dass die Brennraumfläche des Zylinderdeckels derart bearbeitet wird, dass der Düsenkanal ein Längenverhältnis aufweist, welches höchstens gleich zwei ist, wobei das Längenverhältnis das Verhältnis aus einer maximalen Länge des Düsenkanals und einer minimalen Länge des Düsenkanals ist.

Die für die Erfindung wesentliche Erkenntnis, dass die variierende Länge des Düsenkanals, welcher die Sitzfläche der Brennstoffbohrung mit dem Brennraum verbindet, über den Umfang des Düsenkanals gesehen eine wesentliche Ursache für die Rissbildung in der Wandung des Brennraums darstellt, lässt sich auch vorteilhaft für die Reparatur eines Zylinderdeckels eines Grossdieselmotors einsetzten. Bei einer solchen Reparatur wird dann die Brennraumfläche so bearbeitet, dass der reparierte Zylinderdeckel einen erfindungsgemässen Zylinderdeckel verkörpert.

Vorzugsweise wird das Längenverhältnis dadurch geändert, dass auf der Brennraumfläche eine wulstförmige Erhebung aufgebracht wird, oder dass in der Brennraumfläche eine Ausnehmung vorgesehen wird.

Durch die Erfindung wird ferner ein Grossdieselmotor vorgeschlagen, insbesondere ein längsgespülter Zweitakt-Grossdieselmotor, mit mindestens einem Zylinder, wobei der Zylinder einen Zylinderdeckel aufweist, der erfindungsgemäss ausgestaltet ist, oder der mit einem erfindungsgemässen Verfahren repariert ist.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Aufsicht aus dem Brennraum auf den Zylinderdeckel eines Zylinders eines Grossdieselmotor, wobei auf der linken Seite ein erstes Ausführungsbeispiels eines erfindungsgemässen Zylinderdeckels dargestellt ist und auf der rechten Seite ein Zylinderdeckel aus dem Stand der Technik,
- Fig. 2:: wie Fig. 1, jedoch in einer Schnittdarstellung entlang der Schnittlinie II-II in Fig. 1,
- Fig. 3:: ein vergrösserter Ausschnitt aus Fig. 2,
- Fig. 4:: eine Schnittdarstellung eines zweiten Ausführungsbeispiels eines erfindungsgemässen Zylinderdeckels in einem Schnitt entlang der Zylinderachse, und
- Fig. 5:: ein vergrösserter Ausschnitt aus Fig. 4.

Mit dem Begriff "Grossdieselmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird.

Bei der folgenden Beschreibung der Erfindung anhand von Ausführungsbeispielen wird mit beispielhaftem Charakter auf den für die Praxis besonders wichtigen Fall eines Grossmotors Bezug genommen, der als Dual-Fuel Motor ausgestaltet ist, also als ein Motor, der mit zwei unterschiedlichen Brennstoffen betrieben werden kann. Im Speziellen kann dieses Ausführungsbeispiel des Grossdieselmotors in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise Erdgas, in Form eines vorgemischten Luft-Brennstoff-Gemisches im Brennraum zur Zündung gebracht wird. Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck des Gases höchstens 50 bar vorzugsweise höchstens 20 bar beträgt. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge selbstzündender flüssiger Brennstoff (z. B. Diesel oder Schweröl) in den Brennraum oder in eine Vorkammer eingebracht wird, der sich dann selbst entzündet und dadurch die Fremdzündung des Luft-Brennstoff-Gemisches im Brennraum verursacht.

Bei den hier beschriebenen Ausführungsbeispielen ist der Grossmotor als längsgespülter Dual-Fuel Zweitakt-Grossdieselmotor ausgestaltet.

Es versteht sich, dass die Erfindung nicht auf diesen Typ von Grossdieselmotor und auf diese Verwendung beschränkt ist, sondern Grossdieselmotoren im Allgemeinen betrifft. Wie bereits erwähnt, umfasst der Begriff "Grossdieselmotor" auch solche Motoren, die zusätzlich zum Dieselbetrieb auch in einem anderen Betrieb, beispielsweise im Ottobetrieb betrieben werden können. Natürlich ist es auch möglich, dass der Grossdieselmotor nur für die Verbrennung eines einzigen flüssigen Brennstoffs, beispielsweise Schweröl oder Diesel ausgestaltet ist. Auch ist es möglich, dass der Grossmotor als Multi-Fuel Grossmotor ausgestaltet ist, der für die Verbrennung von mehr als zwei Brennstoffen ausgestaltet ist.

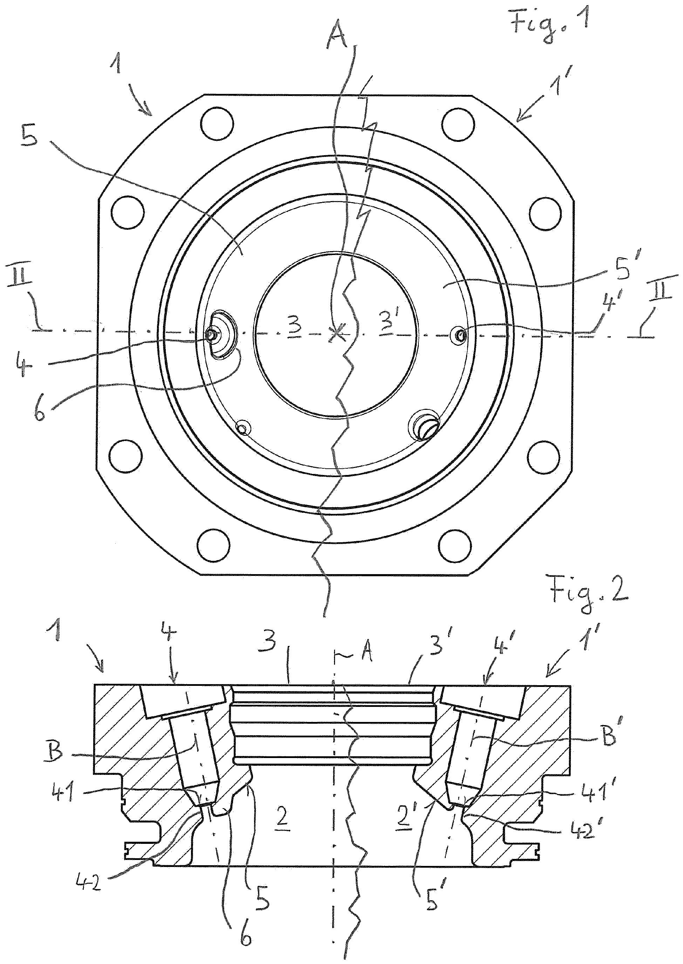

Der Grossdieselmotor hat mindestens einen, üblicherweise aber eine Mehrzahl von Zylindern, wobei im Inneren jedes Zylinders in an sich bekannter Art ein Kolben entlang einer Zylinderachse zwischen einem oberen Totpunkt und einem unteren Totpunkt hin und her bewegbar angeordnet ist. Die Oberseite des Kolbens begrenzt gemeinsam mit einem Zylinderdeckel 1 einen Brennraum 2, in welchen ein Brennstoff für die Verbrennung eingebracht wird. Der Brennraum weist eine Brennraumachse A (Fig. 1) auf, die üblicherweise mit der Zylinderachse zusammenfällt, wenn der Zylinderdeckel 1 auf dem Zylinder montiert ist. Der Kolben ist in an sich bekannter Weise über eine Kolbenstange mit einem Kreuzkopf verbunden, welcher über eine Schubstange mit einer Kurbelwelle verbunden ist, sodass die Bewegung des Kolbens über die Kolbenstange, den Kreuzkopf und die Schubstange auf die Kurbelwelle übertragen wird, um diese zu drehen.

Fig. 1 zeigt eine schematische Aufsicht aus dem Brennraum 2, 2' auf den Zylinderdeckel 1,1' eines der Zylinder eines Grossdieselmotor. Zum besseren Verständnis ist Fig. 1 zweigeteilt, wobei auf der darstellungsgemäss linken Seite ein erstes Ausführungsbeispiel eines erfindungsgemässen Zylinderdeckels 1 dargestellt ist und auf der darstellungsgemäss rechten Seite ein Zylinderdeckel 1', der aus dem Stand der Technik bekannt ist. Bei der aus dem Stand der Technik bekannten Ausführungsform werden Bezugszeichen verwendet, die mit einem Strich bzw. einem Hochkomma versehen sind. Bei den erfindungsgemässen Ausführungsbeispielen werden Bezugszeichen ohne Hochkomma verwendet.

Fig. 2 zeigt eine Schnittdarstellung der Ausführungsformen aus Fig. 1 in einem Schnitt entlang der Brennraumachse A, wobei wie in Fig. 1 auf der darstellungsgemäss linken Seite das erste Ausführungsbeispiel eines erfindungsgemässen Zylinderdeckels 1 dargestellt ist, und auf der darstellungsgemäss rechten Seite die Ausführungsform die aus dem Stand der Technik bekannt ist.

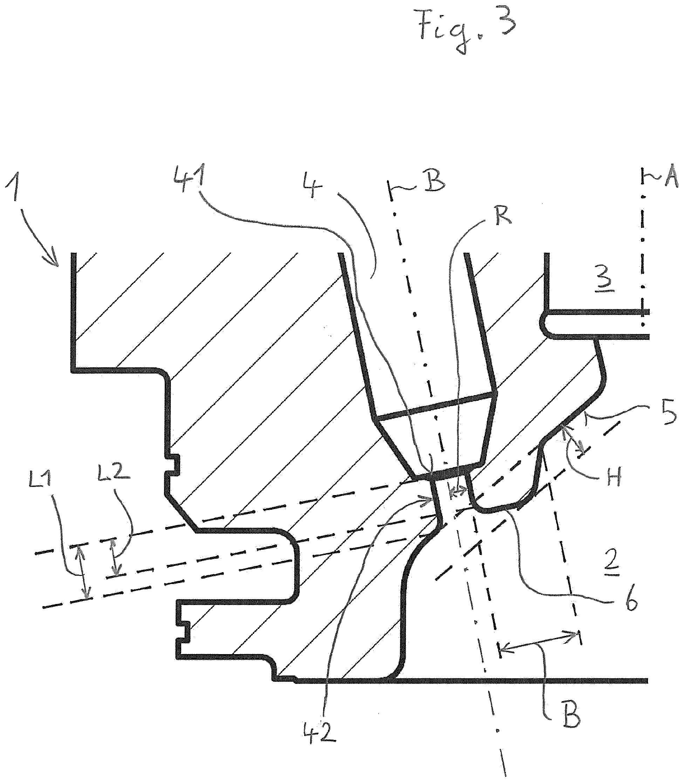

Fig. 3 zeigt einen Ausschnitt aus Fig. 2 in einer vergrösserten Darstellung, um die Festlegung verschiedener Abmessungen zu veranschaulichen. In Fig. 3 ist nur noch das erste Ausführungsbeispiel des erfindungsgemässen Zylinderdeckels 1 gezeigt.

Der Zylinderdeckel 1,1' umfasst eine zentrale Bohrung 3, 3' für die Aufnahme eines Auslassventils (nicht dargestellt) sowie mindestens eine Brennstoffbohrung 4, 4' für die Aufnahme einer Brennstoffeinspritzdüse (nicht dargestellt), mit welcher der Brennstoff, beispielsweise Schweröl, in den Brennraum 2, 2' einbringbar ist. Bei vielen Ausführungsformen ist in jedem Zylinderdeckel 1, 1' ein Mehrzahl von Brennstoffeinspritzdüsen vorgesehen, beispielsweise zwei oder drei Brennstoffeinspritzdüsen. Es versteht sich, dass dann für jede Brennstoffeinspritzdüse jeweils eine separate Brennstoffbohrung 4, 4' vorgesehen ist. Da es für das Verständnis ausreichend ist, wird im Folgenden nur auf eine Brennstoffbohrung 4 Bezug genommen, wobei natürlich bei der erfindungsgemässen Ausgestaltung auch eine Mehrzahl von Brennstoffbohrungen 4 vorgesehen sein kann, von denen jede eine Brennstoffeinspritzdüse aufnimmt.

Auch sind Ausgestaltungen möglich, bei welchem für jeden Zylinder mehrere Bohrungen für die Aufnahme einer Mehrzahl von Auslassventilen in dem Zylinderdeckel vorgesehen sind. Beispielsweise ist es möglich, dass jeder Zylinder drei oder vier Auslassventile aufweist. Dann ist für jedes dieser Auslassventile eine Bohrung im Zylinderdeckel 1 vorgesehen oder es ist eine grössere Bohrung im Zylinderdeckel vorgesehen, welche eine bauliche Einheit aufnimmt, in welcher mehrere Auslassventile enthalten sind.

Der Zylinderdeckel 1,1' umfasst ferner eine Brennraumfläche 5, 5', welche den Brennraum 2, 2' begrenzt. Bei dem hier beschriebenen Ausführungsbeispiel ist die Brennraumfläche 5 kegelstumpfförmig ausgestaltet. In anderen Ausführungsformen kann die Brennraumfläche 5 bzw. 5' auch die Form einer sphärischen Fläche oder einer Mischform aus einer sphärischen und einer kegelstumpfförmigen Fläche haben. Die zentrale Bohrung 3, 3' für die Aufnahme des Auslassventils erstreckt sich in Richtung der Brennraumachse A. Da die Brennraumfläche 5, 5' hier eine kegelstumpfförmige Fläche ist, hat sie eine Kegelachse. Im Allgemeinen hat die Brennraumfläche eine Symmetrieachse. Diese Kegelachse oder Symmetrieachse fällt mit der Brennraumachse A zusammen und somit mit der Zylinderachse, wenn der Zylinderdeckel 1 auf einem Zylinder montiert ist. Die Brennstoffbohrung 4, 4' für die Aufnahme der Brennstoffeinspritzdüse erstreckt sich in Richtung einer Brennstoffachse B, B' und mündet in die Brennraumfläche 5, 5' ein. In der Brennstoffbohrung 4, 4' ist eine Sitzfläche 41, 41' für die Brennstoffeinspritzdüse vorgesehen, auf welcher sich die Brennstoffeinspritzdüse abstützt, wenn sie in die Brennstoffbohrung 4, 4' eingesetzt ist. Die Sitzfläche 41, 41' ist senkrecht zur Brennstoffachse B, B' angeordnet. Die Sitzfläche 41, 41' ist über einen Düsenkanal 42, 42' mit der Brennraumfläche 5, 5' verbunden.

Die Sitzfläche 41, 41' ist üblicherweise kegelstumpfförmig ausgestaltet, was in der Zeichnung nur andeutungsweise zu erkennen ist. Die Sitzfläche 41, 41' hat somit eine Symmetrieachse. Diese fällt mit der Brennstoffachse B, B' zusammen.

Üblicherweise schliesst die Brennstoffachse B, B' mit der Brennraumachse A, A' einen Winkel ein, der von Null verschieden ist und der je nach Ausgestaltung des Zylinderdeckels 1 bzw. der Platzverhältnisse am Zylinderdeckel 1 bis zu 45° sein kann.

Der Aufbau und die einzelnen Komponenten des Grossdieselmotors, wie beispielsweise das Einspritzsystem für den Flüssigmodus, das Gaszuführsystem für den Gasmodus, das Gaswechselsystem, das Abgassystem oder das Turboladersystem für die Bereitstellung der Spül- bzw. Ladeluft, sowie das Kontroll- und Steuerungssystem für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner näheren Erläuterung. Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung) und die Betätigung des Auslassventils, einstellen oder steuern bzw. regeln lassen.

Erfindungsgemäss weist der Düsenkanal 42 ein Längenverhältnis auf welches höchstens gleich zwei ist, wobei das Längenverhältnis definiert ist als der Quotient aus einer maximalen Länge L1 des Düsenkanals 42 und einer minimalen Länge L2 des Düsenkanals. Diese Längen werden im Folgenden anhand von Fig. 3 näher erläutert.

Durch die relative Anordnung der Brennstoffbohrung 4 und der Brennraumfläche 5 bedingt, ist es in aller Regel so, dass die Sitzfläche 41, deren Symmetrieachse identisch mit der Brennstoffachse B ist, nicht parallel zur Brennraumfläche 5 liegt. Daher mündet der Düsenkanal 42, der ja Bestandteil der Brennstoffbohrung 4 ist, nicht rechtwinklig in die Brennraumfläche 5 ein. Folglich ändert sich die Länge des Düsenkanals 42, also seine Erstreckung in Richtung der Brennstoffachse B, wenn man sich entlang des Umfangs des Düsenkanals 42 bewegt. Dies liegt offensichtlich daran, dass der Düsenkanal 42 nicht senkrecht in die Brennraumfläche 5 einmündet bzw. dass die Sitzfläche 41 nicht parallel zur Brennraumfläche 5 ist. Bewegt man sich also entlang des Umfangs des Düsenkanals 42 so ändert sich seine Länge in Richtung der Brennraumachse B zwischen der maximalen Länge L1 dort, wo der Abstand der Sitzfläche 41 von der Brennraumfläche 5 maximal ist, und der minimalen Länge L2 dort, wo der Abstand der Sitzfläche 41 von der Brennraumfläche 5 am geringsten ist.

Für die Erfindung ist die Erkenntnis wichtig, dass die variierende Länge des Düsenkanals 42 über den Umfang des Düsenkanals 42 gesehen eine wesentliche Ursache für die Rissbildung in der Wandung des Brennraums 2 und insbesondere in der Brennraumfläche 5 darstellt. Daher wird durch die Erfindung vorgeschlagen, diese Änderungen in der Länge des Düsenkanals 42 zu reduzieren, derart dass das Längenverhältnis, welches das Verhältnis aus der maximalen Länge L1 und der minimalen Länge L2 des Düsenkanals 42 höchstens zwei beträgt. Durch diese Reduzierung in der Änderung der Länge des Düsenkanals 42 über seinen Umfang gesehen, lässt sich die Rissbildung im Brennraum 2 und insbesondere in der Brennraumfläche 5 zumindest deutlich reduzieren.

Es ist zu erwarten, dass idealerweise das Verhältnis aus der maximalen Länge L1 und der minimalen Länge L2 gleich eins sein sollte, das heisst die maximale und die minimale Länge L1, L2 sind identisch, sodass der Düsenkanal 42über seinen gesamten Umfang gesehen eine konstante Länge aufweist. In vielen Anwendungsfällen kann dieser Idealfall jedoch aus praktischen Gründen nicht realisiert werden. In der Praxis hat sich jedoch gezeigt, dass sich zumindest eine sehr gute Reduzierung, wenn nicht sogar eine vollständige Unterdrückung der Rissbildung insbesondere dann realisieren lässt, wenn das Längenverhältnis höchstens 1.5 ist und vorzugsweise kleiner als 1.4 ist.

Um das Längenverhältnis aus L1 und L2 auf einen Wert von höchstens zwei zu reduzieren, ist bei dem ersten Ausführungsbeispiel auf der Brennraumfläche 5 eine wulstförmige Erhebung 6 vorgesehen, welche einen Teil des Düsenkanals 42 begrenzt, welche also einen Teil der Wandung des Düsenkanals 42 bildet.

Wie dies insbesondere auf der linken Seite der Fig. 1 zu erkennen ist, erstreckt sich die Erhebung 6 nicht um die gesamte Mündung des Düsenkanals 42 herum, sondern lediglich auf der der Brennraumachse A zugewandten Seite des Düsenkanals 42. Vorzugsweise erstreckt sich die Erhebung 6 höchstens um den halben Umfang des Düsenkanals 42.

Wie bereits erläutert, ist es die hauptsächliche Funktion der Erhebung 6, die Variationen in der Länge des Düsenkanals 42 zu reduzieren. Daher ist es bevorzugt so, dass sich die Höhe H der Erhebung 6 in Umfangsrichtung des Düsenkanals 42 gesehen ändert. Mit der Höhe H ist dabei die Erstreckung der Erhebung 6 senkrecht zur Brennraum Fläche 5 gemeint. In Fig. 3 ist die Höhe H dort eingezeichnet, wo sie ihr Maximum hat. Vorzugsweise hat die Höhe H dort ihr Maximum, wo der Düsenkanal 42 ohne die Erhebung 6 das Minimum seiner Länge hätte.

Die Erhebung 6 hat ferner eine maximale Breite B, die mindestens so gross ist wie der halbe Radius R des zylindrischen Düsenkanals 42. Mit der Breite B ist dabei die Abmessung gemeint, wie weit sich die Erhebung 6 in der Brennraumfläche 5 von der Mündung des Düsenkanals 42 weg erstreckt. Vorzugsweise ist die maximale Breite B mindestens so gross wie der Radius R des Düsenkanals 42.

Zur Herstellung der Erhebung 6 gibt es mehrere Möglichkeiten. So kann beispielsweise die Erhebung bereits bei der Herstellung des Zylinderdeckel 1 in einem Schmiede- oder Giessprozess einstückig mit dem Zylinderdeckel 1 gefertigt werden. Es ist aber auch möglich, nach der Herstellung des Zylinderdeckels die Erhebung 6 in einem gesonderten Arbeitsprozess beispielsweise durch einen Schweissprozess wie Auftragsschweissen zu fertigen. Diese letztgenannte Massnahme ist besonders günstig, wenn ein bereits gebrauchter Zylinderdeckel 1 repariert oder gewartet werden soll.

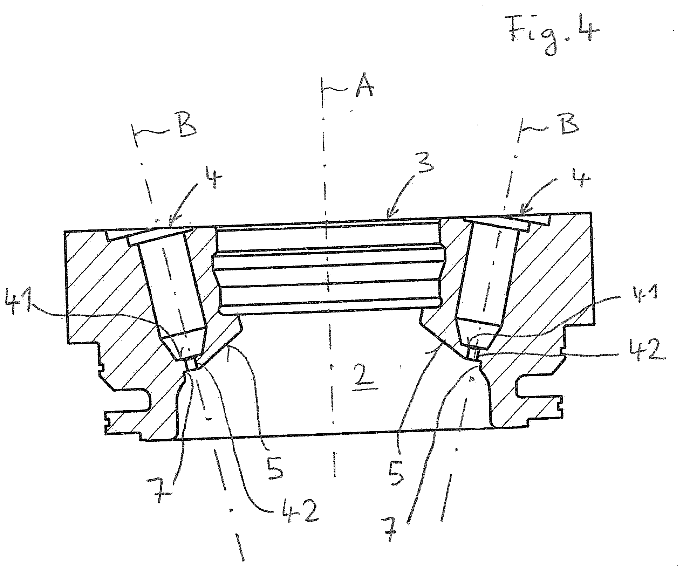

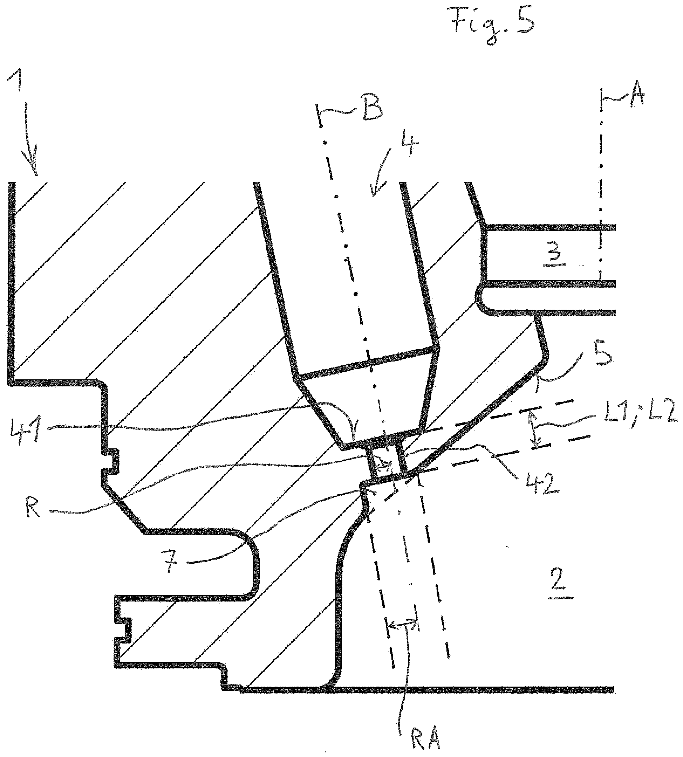

In den Fig. 4 und Fig. 5 ist ein zweites Ausführungsbeispiel eines erfindungsgemässen Zylinderdeckels 1 dargestellt. Dabei zeigt Fig. 4 eine Schnittdarstellung des zweiten Ausführungsbeispiels in einem Schnitt entlang der Brennraumachse A. Fig. 5 zeigt in sinngemäss gleicher Weise wie Fig. 3 eine vergrösserte Darstellung eines Ausschnitts aus Fig. 4

Bei dem zweiten Ausführungsbeispiel ist zur Reduzierung des Längenverhältnisses aus der maximalen Länge L1 und der minimalen Länge L2 des Düsenkanals 42 in der Brennraumfläche 5 eine Ausnehmung 7 vorgesehen, in welche der Düsenkanal 42 einmündet. Diese Ausnehmung 7 ist vorzugsweise ringsegmentförmig oder ringförmig ausgestaltet und koaxial mit dem zylindrischen Düsenkanal 42, dessen Achse die Brennstoffachse B ist. Der Radius der Ausnehmung 7 ist mit dem Bezugszeichen RA bezeichnet.

Durch diese Massnahme lässt sich der Düsenkanal 42 in denjenigen Bereichen entlang seines Umfangs verkürzen, in denen der Düsenkanal 42 ohne die Ausnehmung 7 länger wäre als in anderen Bereichen. Bei dieser Ausführungsform wird der Düsenkanal 42 zumindest in denjenigen Bereichen verkürzt, in denen er ohne die Ausnehmung 7 die grösste Länge aufweist.

Insbesondere in Fig. 5 ist zu erkennen, dass bei dem zweiten Ausführungsbeispiel eine Ausführungsform vorliegt, bei welcher die maximale Länge L1 gleich gross ist wie die minimale Länge L2, das heisst L1=L2 und das bedeutet, dass die Länge des Düsenkanals 42 über seinen Umfang gesehen einen konstanten Wert hat, das Längenverhältnis folglich gleich 1 ist. Vorzugsweise ist die Ausnehmung 7 derart ausgestaltet, dass sie das Längenverhältnis L1 zu L2 auf einen vorgebbaren Wert reduziert. Wie bereits gesagt, ist der minimale Wert für das Längenverhältnis gleich eins. Für viele Anwendungen ist es in der Praxis jedoch vollkommen ausreichend, wenn man das Längenverhältnis auf einen Wert von grösser als eins einstellt, beispielsweise auf 1.5. Der jeweils gewünschte Wert für das Längenverhältnis kann dann durch die geometrischen Abmessungen der Ausnehmung 7 realisiert werden.

Da die Ausnehmung 7 in erster Linie den Unterschied zwischen der maximalen Länge des Düsenkanals 42 ohne Ausnehmung 7 und der minimalen Länge des Düsenkanals ohne Ausnehmung 7 reduzieren oder ausgleichen soll, ist es vorteilhaft, wenn sich die Ausnehmung 7 in Umfangsrichtung des Düsenkanals 42 gesehen, mindestens über den halben Umfang des Düsenkanals 42 erstreckt. Es ist auch möglich, dass sich die Ausnehmung 7 in Umfangsrichtung des Düsenkanals 42 gesehen, über den gesamten Umfang des Düsenkanals 42 erstreckt. Die Tiefe der Ausnehmung 7 senkrecht zur Brennraumfläche 5 ändert sich in Umfangsrichtung des Düsenkanals 7, um den Unterschied zwischen der minimalen Länge L2 und der maximalen Länge L1 auf den gewünschten Wert zu reduzieren.

Der Radius RA der Ausnehmung 7 ist vorzugsweise mindestens doppelt so gross ist wie der Radius R des Düsenkanals 42.

Zur Herstellung der Ausnehmung 7 gibt es mehrere Möglichkeiten. So kann beispielsweise die Ausnehmung 7 bereits bei der Herstellung des Zylinderdeckels 1 in einem Schmiede- oder Giessprozess einstückig mit dem Zylinderdeckel 1 gefertigt werden. Es ist aber auch möglich, nach der Herstellung des Zylinderdeckels 1 die Ausnehmung 7 in einem gesonderten Arbeitsprozess beispielsweise durch ein spanabhebendes Verfahren wie Fräsen zu fertigen. Diese letztgenannte Massnahme ist besonders günstig, wenn ein bereits gebrauchter Zylinderdeckel 1 repariert oder gewartet werden soll.

Die für die Erfindung wesentliche Erkenntnis, dass die variierende Länge des Düsenkanals 42, welcher die Sitzfläche 41 der Brennstoffbohrung 4 mit dem Brennraum 2 verbindet, über den Umfang des Düsenkanals 42 gesehen eine wesentliche Ursache für die Rissbildung in der Wandung des Brennraums 2 darstellt, lässt sich auch vorteilhaft für die Reparatur eines Zylinderdeckels 1 eines Grossdieselmotors einsetzen.

Das erfindungsgemässe Verfahren zum Reparieren eines Zylinderdeckels 1 eines Zylinders eines Grossdieselmotors ist insbesondere dadurch gekennzeichnet, dass die Brennraumfläche 5 des Zylinderdeckels 1 derart bearbeitet wird, dass der Düsenkanal 42 ein Längenverhältnis aufweist, welches höchstens gleich zwei ist, wobei das Längenverhältnis das Verhältnis aus der maximalen Länge L1 des Düsenkanals 42 und der minimalen Länge L2 des Düsenkanals ist.

Vorzugsweise wird dazu das Längenverhältnis dadurch geändert, dass auf der Brennraumfläche 5 die wulstförmige Erhebung 6 aufgebracht wird, beispielsweise mittels eines Schweissprozesses, oder dass in der Brennraumfläche 5 die Ausnehmung vorgesehen wird, beispielsweise durch Fräsen.

## Patentansprüche

1. Zylinderdeckel für einen Zylinder eines Grossdieselmotors, wobei der Zylinderdeckel mindestens eine Brennstoffbohrung (4) für die Aufnahme einer Brennstoffeinspritzdüse aufweist, sowie eine Brennraumfläche (5) zur Begrenzung eines Brennraums (2), welcher eine Brennraumachse (A) aufweist, wobei sich die Brennstoffbohrung (4) in Richtung einer Brennstoffachse (B) erstreckt und in die Brennraumfläche (5) einmündet, wobei in der Brennstoffbohrung (4) eine Sitzfläche (41) für die Brennstoffeinspritzdüse vorgesehen ist, wobei die Sitzfläche (41) eine Symmetrieachse aufweist, welche mit der Brennstoffachse (B) zusammenfällt, und wobei die Sitzfläche (41) durch einen Düsenkanal (42) mit der Brennraumfläche (5) verbunden ist, **dadurch gekennzeichnet dass** der Düsenkanal (42) ein Längenverhältnis aufweist, welches das Verhältnis aus einer maximalen Länge (L1) des Düsenkanals (42) und einer minimalen Länge (L2) des Düsenkanals (42) ist, wobei das Längenverhältnis höchstens gleich zwei ist.

2. Zylinderdeckel nach Anspruch 1, wobei das Längenverhältnis höchstens 1.5 ist und vorzugsweise kleiner als 1.4 ist.

3. Zylinderdeckel nach einem der vorangehenden Ansprüche, wobei auf der Brennraumfläche (5) eine wulstförmige Erhebung (6) vorgesehen ist, welche einen Teil des Düsenkanals (42) begrenzt.

4. Zylinderdeckel nach Anspruch 3, wobei die Erhebung (6) den Düsenkanal (42) auf seiner der Brennraumachse (A) zugewandten Seite begrenzt.

5. Zylinderdeckel nach Anspruch 3 oder Anspruch 4, wobei die Erhebung (6) derart ausgestaltet ist, dass sie das Längenverhältnis auf einen vorgebbaren Wert reduziert.

6. Zylinderdeckel nach einem der Ansprüche 3 bis 5, wobei sich die Erhebung (6) in Umfangsrichtung des Düsenkanals (42) gesehen, höchstens über den halben Umfang des Düsenkanals (42) erstreckt.

7. Zylinderdeckel nach einem der Ansprüche 3 bis 6, wobei sich die Höhe (H) der Erhebung (6) in Umfangsrichtung des Düsenkanals(42) gesehen ändert.

8. Zylinderdeckel nach einem der Ansprüche 3 bis 7, wobei die Erhebung (6) eine maximale Breite (B) aufweist, die mindestens so gross ist wie der halbe Radius (R) des Düsenkanals (42), und vorzugsweise mindestens so gross wie der Radius (R) des Düsenkanals 42.

9. Zylinderdeckel nach einem der Ansprüche 1 oder 2, wobei in der Brennraumfläche (5) eine Ausnehmung (7) vorgesehen ist, in welche der Düsenkanal (42) einmündet.

10. Zylinderdeckel nach Anspruch 9, wobei die Ausnehmung (7) derart ausgestaltet ist, dass sie das Längenverhältnis auf einen vorgebbaren Wert reduziert.

11. Zylinderdeckel nach einem der Ansprüche 9 oder 10, wobei sich die die Ausnehmung (7) in Umfangsrichtung des Düsenkanals (42) gesehen, mindestens über den halben Umfang des Düsenkanals (42) erstreckt.

12. Zylinderdeckel nach einem der Ansprüche 9-11, wobei die Ausnehmung (7) einen Radius (RA) aufweist, der mindestens doppelt so gross ist wie der Radius (R) des Düsenkanals (42).

13. Verfahren zum Reparieren eines Zylinderdeckels eines Zylinders eines Grossdieselmotors, wobei der Zylinderdeckel mindestens eine Brennstoffbohrung (4) für die Aufnahme einer Brennstoffeinspritzdüse aufweist, sowie eine Brennraumfläche (5) zur Begrenzung eines Brennraums (2), welcher eine Brennraumachse (A) aufweist, wobei sich die Brennstoffbohrung (4) in Richtung einer Brennstoffachse (B) erstreckt und in die Brennraumfläche (5) einmündet, wobei in der Brennstoffbohrung (4) eine Sitzfläche (41) für die Brennstoffeinspritzdüse vorgesehen ist, wobei die Sitzfläche (41) eine Symmetrieachse aufweist, welche mit der Brennstoffachse (B) zusammenfällt, und wobei die Sitzfläche (41) durch einen Düsenkanal (42) mit der Brennraumfläche (5) verbunden ist, welches Verfahren **dadurch gekennzeichnet ist, dass** die Brennraumfläche (5) des Zylinderdeckels (1) derart bearbeitet wird, dass der Düsenkanal (42) ein Längenverhältnis aufweist, welches höchstens gleich zwei ist, wobei das Längenverhältnis das Verhältnis aus einer maximalen Länge (L1) des Düsenkanals (42) und einer minimalen Länge (L2) des Düsenkanals (42) ist.

14. Verfahren nach Anspruch 13, wobei das Längenverhältnis dadurch geändert wird, dass auf der Brennraumfläche (5) eine wulstförmige Erhebung (6) aufgebracht wird, oder dass in der Brennraumfläche (5) eine Ausnehmung (7) vorgesehen wird.

15. Grossdieselmotor, insbesondere längsgespülter Zweitakt-Grossdieselmotor, mit mindestens einem Zylinder, wobei der Zylinder einen Zylinderdeckel (1) aufweist, der gemäss einem der Ansprüche 1 bis 12 ausgestaltet ist, oder der mit einem Verfahren gemäss einem der Ansprüche 13-14 repariert ist.
